# EUROPÄISCHE PATENTANMELDUNG

(11) **EP 0 640 425 A1**
(43) Veröffentlichungstag der Anmeldung: **01.03.1995**
(21) Anmeldenummer: 94113229.2
(22) Anmeldetag: 24.08.1994
(51) Int. Cl.: B23K 9/20

(54) **Automatische Bearbeitungsvorrichtung, insbesondere Schweissvorrichtung und Verfahren zum Krontrollieren von Schweissverbindungen**

(30) Priorität: 24.08.1993 DE 4328386
(71) Anmelder: KLAUS KLEINMICHEL GmbH, D-82402 Seeshaupt (DE)
(72) Erfinder: Kleinmichel, Klaus, D-81193 St. Heinrich (DE); Böhle, Hartmut, D-82393 Iffeldorf (DE)
(74) Vertreter: Flosdorff, Jürgen, Dr.

(57) **Zusammenfassung**

An automatisch arbeitenden Schweißstationen einer Fertigungsstraße treten unvermeidlich fehlerhafte oder fehlende Schweißvorgänge auf, die häufig erst nach Durchlauf durch weitere automatische oder manuelle Bearbeitungsstationen erkannt werden, wenn beispielsweise auf einen irrtümlicherweise nicht angeschweißten Schraubenbolzen eine Mutter aufgeschraubt werden soll. Je später ein fehlender oder fehlerhafter Schweißvorgang auf einer Fertigungslinie erkannt wird, umso größer sind die mit der Beseitigung des Fehlers verbundenen Kosten. Damit derartige fehlende oder fehlerhafte Schweißvorgänge frühzeitig erkannt werden können, wird die Schweißvorrichtung einer Schweißstation mit einer Spritzpistole ausgerüstet, die im Falle eines fehlenden oder fehlerhaften Schweißvorgangs dicht neben die vorgesehene Schweißstelle eine Farbmarkierung aufsprüht, die an der nächsten mit einer Arbeitsperson besetzten Bearbeitungsstation visuell erfaßt wird, so daß das fehlerhafte Werkstück aus der Fertigungslinie ausgesondert werden kann. Hierdurch lassen sich die Folgekosten fehlender oder fehlerhafter Schweißvorgänge erheblich reduzieren.

## Beschreibung

Die Erfindung betrifft eine automatisch arbeitende Bearbeitungsvorrichtung, insbesondere Schweißvorrichtung, mit der beispielsweise an einer Schweißstation einer Fertigungsstraße oder Fertigungslinie automatisch Bolzen, Gewindebolzen, Muttern usw. angeschweißt oder verschweißte Blechverbindungen hergestellt werden. Die Fertigungsstraße kann teil- oder vollautomatisiert sein und zur Montage beispielsweise von Kraftfahrzeugen oder anderen Aggregaten vorgesehen sein, ohne allerdings hierauf beschränkt zu sein.

Auf Fertigungsstraßen wie einer Kraftfahrzeugmontagestraße werden vielfältige Arbeitsgänge teilweise automatisch und teilweise von Hand nacheinander an Werkstücken ausgeführt, die schließlich beim Durchlaufen der Fertigungsstraße zu dem Endprodukt zusammengefügt werden. Viele Fertigungsstraßen enthalten Schweißstationen, an denen eine oder mehrere Schweißvorrichtungen wie z.B. Schweißzangen Schweißvorgänge ausführen, wobei als typisches Beispiel hier das Anschweißen mehrerer Schraubenbolzen an vorbestimmten Stellen eines Werkstücks genannt sei. Dabei können an der Schweißstation mehrere Schweißvorrichtungen dicht nebeneinander angeordnet sein, die jeweils gleichzeitig einen Bolzen anzuschweißen haben.

Es kann nicht ausbleiben, daß hin und wieder ein Schweißvorgang entweder fehlerhaft oder garnicht ausgeführt wird, wofür verschiedene Ursachen in Betracht kommen. Der Fehler kann in der Schweißvorrichtung liegen, die durch Verschleiß eines Bauteils funktionsfähig geworden sein kann, oder die beispielsweise nicht mit dem erforderlichen elektrischen Strom zu Ausführung des Schweißvorgangs versorgt sein kann. Eine weitere mögliche Ursache für den Ausfall eines vorgesehenen Schweißvorgangs kann beispielsweise auch darin liegen, daß die Schweißstation nicht mit der korrekten Anzahl von anzuschweißenden Bolzen etc. versorgt worden ist.

In der Praxis ist nicht zu vermeiden, daß an automatisch arbeitenden Schweißstationen einer Fertigungsstraße fehlerhafte oder fehlende Schweißvorgänge auftreten, wobei Untersuchungen an Montagebändern von Kraftfahrzeugwerken ergeben haben, daß pro Tag ein Fehlbestand von ca. 30 bis 80 Bolzen an Kraftfahrzeugteilen zu verzeichnen ist.

Der Umstand, daß beispielsweise auf ein Werkstück nur 9 von 10 vorgesehenen Bolzen etc. an einer Schweißstation angeschweißt wurde, wird häufig erst an der Bearbeitungsstation entdeckt, an der auf die Schraubenbolzen Muttern aufgeschraubt werden sollen. Dabei kann das Werkstück bis zum Entdecken seines fehlerhaften Zustandes durchaus eine große Anzahl von automatischen oder manuellen Bearbeitungsstationen durchlaufen haben, ohne daß das Fehlen des einen Bolzens bemerkt wurde. Das Werkstück kann mittlerweile beispielsweise in ein Kraftfahrzeug eingebaut und vielfältig bearbeitet, beispielsweise mit weiteren Werkstücken Zusammengesetzt sein, ehe der Fehler zutage tritt.

Da auf einer Fertigungsstraße der betrachteten Art nicht in den teil- oder vollautomatisierten Arbeitsablauf in der Weise eingegriffen werden kann, daß ein fehlender Bolzen, eine fehlende Mutter, eine fehlende Schweißnaht oder dergleichen auf dieser Fertigungsstraße von Hand angeschweißt werden kann, muß der das fehlerhafte Werkstück enthaltende Gegenstand, beispielsweise ein nahezu fertig montiertes Fahrzeug, aus der Fertigungsstraße ausgeschleust und auf einer Nacharbeitungslinie gesondert bearbeitet werden. Dabei kann es beispielsweise erforderlich sein, ein bereits lackiertes Fahrzeug wieder teilweise auseinander zu bauen, nur um einen einzigen fehlenden Bolzen an ein Werkstück anzuschweißen.

Das Ausschleusen von fehlerhaften Produkten aus einer Fertigungsstraße und das Nachholen von fehlerhaften oder ausgefallenen Schweißarbeiten auf einer Nachbearbeitungslinie ist umso kostspieliger, je später der Fehler erkannt wird, da es häufig unvermeidlich ist, bis dahin durchgeführte Arbeiten wieder rückgängig zu machen, beispielsweise montierte Einzelteile wieder abzubauen, um das fehlerhafte Werkstück in einen korrekten Zustand versetzen zu können.

Der vorliegenden Erfindung liegt die Aufgabe zugrunde, eine automatisch arbeitende Bearbeitungsvorrichtung, insbesondere Schweißvorrichtung anzugeben, deren Fehlfunktion besser als bei herkömmlichen Vorrichtungen erkennbar ist. Außerdem soll ein Verfahren zum Kontrollieren der von einer automatischen Schweißvorrichtung hergestellten Schweißverbindung angegeben werden.

Diese Aufgabe wird erfindungsgemäß durch die im Kennzeichen der Patentansprüche 1 und 8 angegebenen Merkmale gelöst.

Vorteilhafte Ausgestaltung der Erfindung sind in den abhängigen Ansprüchen gekennzeichnet.

Die erfindungsgemäße Bearbeitungsvorrichtung ist mit einer Überwachung- und Steuereinrichtung ausgestattet, die jeweils erfaßt, ob der an einem Werkstück vorgesehene Arbeitsgang ausgeführt wird, sowie mit einer Auftragseinrichtung, die im Falle eines nicht ausgeführten Bearbeitungsvorgangs, insbesondere Schweißvorgangs über die Steuereinrichtung betätigt wird und eine Markierung auf das Werkstück aufbringt. Es liegt im Rahmen der Erfindung, daß nicht nur fehlende, sondern auch fehlerhafte Bearbeitungsvorgang, insbesondere Schweißvorgänge zur Folge haben, daß die Auftragseinrichtung dies durch eine Markierung anzeigt.

Die Überwachungseinrichtung kann beispielsweise optisch erfassen, ob die Schweißvorrichtung den vorgesehenen Schweißvorgang ausführt, oder beispielsweise durch Messung des zugehörigen Stromverbrauchs. Alle geeigneten Arten der Überwachung der Ausführung der Schweißvorgänge sind im Rahmen der Erfindung anwendbar. Wenn ein fehlender oder fehlerhafter Schweißvorgang erfaßt worden ist, gibt die zugehörige Steuereinrichtung ein Betätigungssignal an die Auftragseinrichtung ab, die daraufhin vorzugsweise eine Markierungsflüssigkeit auf das Werkstück aufbringt.

Die Auftragseinrichtung ist nach einem weiteren Vorschlag der Erfindung vorzugsweise neben dem Schweißkopf der Schweißvorrichtung angeordnet, wobei die Auftragsvorrichtung nach einem weiteren Vorschlag der Erfindung eine Spritzpistole ist. Da an einer Schweißstation eine Vielzahl von Schweißvorrichtungen, beispielsweise Schweißzangen, dicht nebeneinander angeordnet sein können, ist die Auftragsvorrichtung zweckmäßigerweise eine Miniaturspritzpistole, die nur wenige cm Raum neben dem Schweißkopf der Schweißvorrichtung beansprucht. Die Miniaturspritzpistole ist so angeordnet, daß ihre Düse auf die vorgesehene Schweißstelle bzw. dicht neben diese gerichtet ist, so daß die Spritzpistole dort eine Farbmarkierung aufspritzt, wo aufgrund eines Fehlers kein Bolzen, Mutter etc. aufgeschweißt worden ist.

Zweckmäßigerweise sind alle Schweißvorrichtungen, beispielsweise Schweißzangen einer Schweißstation mit einer Auftragseinrichtung versehen. Außerdem dürfte es vorteilhaft sein, wenn jede Schweißvorrichtung mit einer eigenen Überwachungs- und Steuereinrichtung ausgerüstet ist, obwohl es im Rahmen der Erfindung liegt, für mehrere Auftragseinrichtungen (mehrerer Schweißzangen) eine gemeinsame Überwachungs- und Steuereinrichtung auszubilden und anzuordnen.

Wie bereits erwähnt, sprüht die erfindungsgemäß vorgesehene Auftragseinrichtung einer Schweißvorrichtung vorzugsweise eine farbige Flüssigkeit auf das Werkstück auf, wenn ein Schweißvorgang nicht oder fehlerhaft ausgeführt wurde. Die Erfindung ist jedoch nicht auf das Aufsprühen einer Farbmarkierung beschränkt, sondern die Auftragseinrichtung kann auch eine andere Art Markierung aufbringen, die beispielsweise durch eine automatische Erfassungseinrichtung für diese Art der Markierung erfaßbar ist.

Eine Farbmarkierung ist jedoch besonders vorteilhaft, weil eine derartige farbige Markierung eines Werkstücks an der nächsten Bearbeitungsstation einer Fertigungsstraße, an der sich eine Arbeitsperson befindet, auffällt, da die vorzugsweise mit einer grellen Farbe, z.B. gelb, orange oder rot, erfolgte Kenzeichnung der Arbeitsperson ohne weiteres "ins Auge springt".

Es liegt auch im Rahmen der Erfindung, daß eine derartige optische Markierung mit einer optischen Erfassungseinrichtung automatisch erfaßt wird, die daraufhin beispielsweise ein akustisches Warnsignal abgeben kann. Die Markierung zeigt dann leicht erkennbar die fehlerhafte Stelle auf dem Werkstück an, so daß umgehend die zugehörige Schweißvorrichtung überprüft werden kann, um den Fehler zu beheben.

Das fehlerhafte Werkstück wird sofort aus der Fertigungslinie ausgeschleust, ohne weiteren Bearbeitungsschritten ausgesetzt zu werden, um in einer Nacharbeitslinie korrigiert zu werden.

Zur Markierung wird eine Flüssigkeit verwendet, die auch dann die Austrittsdüse der Spritzpistole nicht zusetzt, wenn diese längere Zeit außer Betrieb bleibt, wenn alle Schweißvorgänge einwandfrei verlaufen.

Wesentlich ist, daß stets im ausreichenden Maße Markierungsflüssigkeit zur Verfügung steht. Hierzu werden die weiter unten angegebenen Maßnahmen vorgeschlagen.

Die Spritzpistole steht zweckmäßigerweise über einen Schlauch mit einem Druckgefäß in Verbindung, in dem ein mit der Markierungsflüssigkeit gefüllter Behälter auswechselbar angeordnet ist, indem dieser beispielsweise mit seinem Auslaßstutzen in eine innen liegende Fassung des Druckgefäßes eingeschraubt ist. Die Fassung sollte in diesem Fall zur Außenseite hin geschlossen sein und mehrere Durchgangsbohrungen enthalten, die den Zwischenraum zwischen dem Druckgefäß und dem Behälter mit dem Behälterinnenraum verbinden. Wenn das Druckgefäß durch eine hierzu vorgesehene Leitung unter Druck gesetzt wird, wirkt dieser Druck auf den Flüssigkeitsspiegel in dem Behälter ein, wodurch die in dem Behälter befindliche Markierungsflüssigkeit durch ein Steigrohr und einen daran anschließenden Schlauch der Austragsdüse der Spritzpistole zugeführt wird.

Da nicht sichtbar ist, ob sich in dem innerhalb des Druckgefäßes befindlichen Innenbehälter im ausreichenden Maße Markierungsflüssigkeit befindet, wird erfindungsgemäß vorgeschlagen, daß das Druckgefäß, in dem der die Markierungsflüssigkeit enthaltende Innenbehälter angeordnet ist, von einer Wägezelle gehalten wird, die die jeweilige Füllmenge der Flüssigkeit oder einen der Füllmenge entsprechenden Wert erfaßt und vorzugsweise ständig anzeigt. Dabei kann die jeweilige Füllmenge beispielsweise als Volumen oder als Gewichtsgröße erfaßt und angezeigt werden. Die Wägezelle überwacht damit stets den Füllstand des Behälters, so daß dieser nicht leergefahren werden kann, was zu einem Ausfall der Spritzpistole führen würde.

Mit Vorteil wird vorgeschlagen, daß der Außenbehälter mit dem darin befindlichen Innenbehälter an der Wägezelle aufgehängt ist. Es liegt allerdings im Rahmen der Erfindung, daß der Außenbehälter (der nicht unbedingt als Druckgefäß ausgebildet sein muß) auch auf der Wägezelle aufruhen kann, die dann beispielsweise als Druckmeßdose ausgebildet sein kann.

Weiter wird vorgeschlagen, daß die Anzeigeeinrichtung bei Erreichen eines vorbestimmten Füllstandes in dem Innenbehälter ein Warnsignal abgibt. Dieses Warnsignal kann ein optisches Signal sein oder auch akustisch anzeigen, daß nur noch eine vorbestimmte Flüssigkeitsmenge in dem Behälter verfügbar ist.

Es liegt im Rahmen der Erfindung, daß der die Markierungsflüssigkeit enthaltende Behälter ohne ihn umgebenden Außenbehälter, d.h. ohne äußeres Druckgefäß, verwendet wird. Auch in diesem Fall kann es zweckmäßig sein, den Behälter an einer Wägezelle aufzuhängen, die den jeweiligen Füllstand in dem Behälter anzeigt.

Gemäß dem erfindungsgemäßen Verfahren zum Kontrollieren von Schweißverbindungen auf Werkstücken an einer Schweißstation einer Fertigungslinie ist vorgesehen, daß jeder einzelne Schweißvorgang daraufhin überwacht wird, ob er ausgeführt wird, und daß bei einem nicht ausgeführten Schweißvorgang eine Markierung auf das Werkstück aufgebracht wird. Vorteilhafterweise kann dabei auch überwacht werden, ob die einzelnen Schweißvorgänge vorschriftsmäßig ausgeführt werden, wobei auch im Falle eines fehlerhaften Schweißvorgangs die Markierung auf das Werkstück aufgebracht, vorzugsweise aufgesprüht wird.

In weiterer Ausgestaltung des Verfahrens wird vorgeschlagen, daß als Markierung eine Farbflüssigkeit auf das Werkstück aufgesprüht wird, wobei die Farbe zweckmäßigerweise so ausgewählt wird, daß sie deutlich sichtbar ist. Hierzu bieten sich beispielsweise die Farben rot, orange und gelb an.

Die Farbmarkierung wird entweder durch eine Erfassungseinrichtung, beispielsweise eine optische Überwachungseinrichtung, oder aber direkt von einer Arbeitsperson erfaßt, woraufhin das zugehörige Werkstück aus der Fertigungslinie ausgesondert wird.

Gemäß der vorliegenden Erfindung wird ein fehlender oder fehlerhafter Schweißvorgang durch eine Markierung, vorzugsweise eine Farbmarkierung, auf dem Werkstück angezeigt, so daß dieses umgehend ausgesondert werden kann. Hierdurch lassen sich die Folgekosten des fehlenden oder fehlerhaften Schweißvorgangs erheblich reduzieren.

Es liegt im Rahmen der Erfindung, daß die vorgeschlagene Markierung auch bei anderen automatisch ablaufenden Bearbeitungsvorgängen erfolgen kann, beispielsweise an Bearbeitungsstationen, an denen Klebeverbindungen hergestellt werden. Als weiteres Beispiel sei das automatische Aufschrauben von Muttern auf Schraubenbolzen genannt, wobei auch hier ein irrtümlicherweise nicht ausgeführter Schraubvorgang durch eine Farbmarkierung angezeigt werden kann. Es wird noch einmal betont, daß die Erfindung auch auf andere automatische Bearbeitungsvorrichtungen anwendbar ist, für die beispielhaft die beiden vorgenannten Vorgänge aufgeführt sind.

Weitere Einzelheiten der Erfindung ergeben sich aus der nachfolgenden Beschreibung einer bevorzugten Ausführungsform sowie anhand der Zeichnung. Dabei zeigen:
- Fig. 1: eine Seitenansicht einer Schweißvorrichtung, die erfindungsgemäß mit einer Spritzpistole versehen ist;
- Fig. 2: eine Stirnansicht der Anordnung gemäß Fig. 1 und
- Fig. 3: eine Ausführungsform der Anordnung zur Aufnahme der Sprühflüssigkeit, die mit der Spritzpistole verbunden ist.

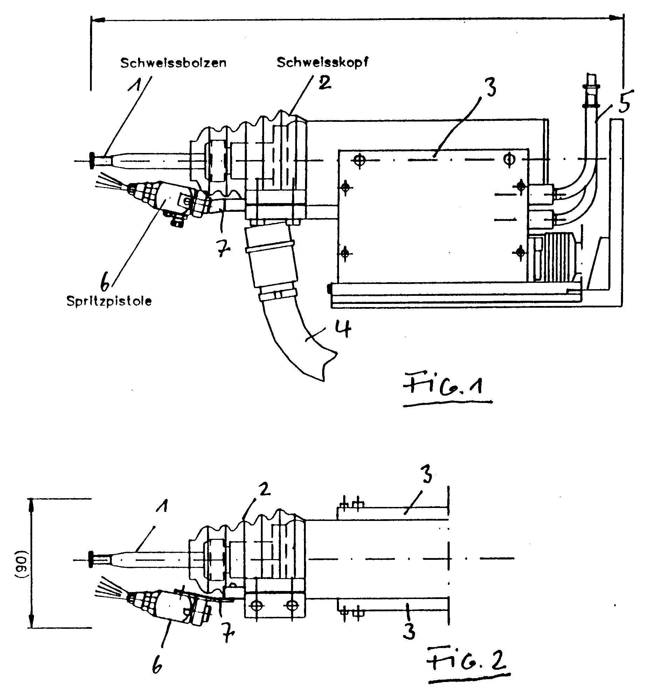

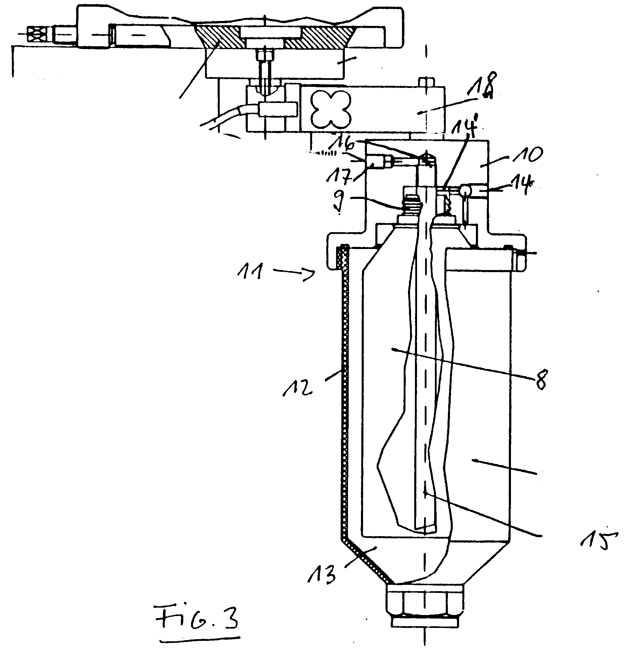

Die Figuren 1 und 2 zeigen einen mit einem Schweißbolzen 1 versehenen Schweißkopf 2, der mittels Halteplatten 3 an einer Schweißstation einer Fertigungslinie befestigt ist. Die weitgehend schematischen Figuren 1 und 2 lassen ferner elektrische Leitungen 4 und 5 für die Schweißvorrichtung erkennen.

Der Schweißkopf 2 ist erfindungsgemäß mit einer Miniaturspritzpistole 6 ausgerüstet, die mittels einer Halterung 7 so an dem Schweißkopf befestigt ist, daß sie in einem Winkel auf dem Schweißbolzen 1 zu gerichtet ist, derart, daß sie auf einem Werkstück im Falle eines nicht oder fehlerhaft ausgeführten Schweißvorgangs dicht neben der Schweißstelle eine Farbmarkierung erzeugt.

Die Miniatur-Spritzpistole, die praktisch keinen zusätzlichen seitlichen Raum bei der dargestellten Schweißvorrichtung in Anspruch nimmt und daher die dicht beieinander liegende Anordnung mehrerer Schweißköpfe nicht beeinträchtigt, ist über einen nicht dargestellten Schlauch mit der in Figur 3 abgebildeten Sprühflüssigkeitsquelle verbunden. Diese befindet sich innerhalb eines Behälters 8, der mit einem an der Außenseite seines Behälterhalses ausgebildeten Gewinde 9 in ein entsprechendes Innengewinde einer Kappe 10 eines Außengefäßes 11 eingeschraubt ist, welches als Druckgefäß ausgebildet ist und mit einem in die Kappe 10 eingeschraubten Unterteil 12 den Sprühflüssigkeitsbehälter 8 unter Bildung eines Druck-Zwischenraumes 13 einschließt.

Die Kappe 10 ist mit einem Trockenluft-Eingangskanal 14 versehen, der sich in der Kappe 10 verzweigt und einerseits in einen Kappenhohlraum 14' oberhalb des Behälterhalses und andererseits in den Druck-Zwischenraum 13 zwischen der Wand des Druckgefäßes 11 und der Außenwand des Behälters 8 einmündet.

Ein in der Figur nicht dargestelltes Sicherheitsventil und ein Entlüfter sind so angeordnet, daß sie zu dem Trockenluft-Eingangskanal 14 jeweils um 90° versetzt sind.

Die Druckerhöhung innerhalb des Behälters 8 bewirkt, daß Markierungsflüssigkeit in einem Steigrohr 15 aufsteigt und durch einen daran anschließenden Austrittskanal 16 in der Kappe 10 sowie einen in der Figur nicht dargestellten flexiblen Schlauch, der an der Markierungsflüssigkeitsaustrittsöffnung 17 angeschlossen ist, der Miniaturspritzpistole 6 zugeführt wird.

Die Markierungsflüssigkeit wird dann aus der Spritzpistole 6 ausgesprüht, wenn diese von der nicht dargestellten Überwachungs- und Steuereinrichtung aktiviert wird. Die Markierung wird durch einen kurzzeitigen Sprühstrahl aufgebracht.

Das Druckgefäß 11 ist an einer Wägezelle 18 aufgehängt, die ihrerseits auf geeignete Weise an der Schweißstation befestigt ist. Die Wägezelle 18 ist mit einem Meßverstärker versehen und zeigt auf einer in der Figur nicht dargestellten Anzeigeeinrichtung ständig einen den Füllstand des Behälters 8 angebenden Wert an, vorzugsweise das jeweils in dem Behälter 8 befindliche Volumen der Markierungsflüssigkeit. Hierzu werden in einer Auswerteeinrichtung die übrigen, bekannten Gewichtskomponenten (Gewicht des Druckgefäßes 11, Gewicht des Behälters 8 ohne Inhalt etc) von dem gemessenen Gesamtgewicht subtrahiert, so daß nur eine die jeweils vorhandene Flüssigkeit widerspiegelnde Angabe angezeigt wird.

Wenn der Füllstand in dem Behälter 8 einen vorgegebenen unteren Grenzwert erreicht, erfolgt eine Warnanzeige, die auf die Notwendigkeit eines bald vorzunehmenden Austauschs des Behälters 8 aufmerksam macht. Es kann vorgesehen sein, daß eine Steuereinrichtung automatisch die Schweißvorrichtung abschaltet, wenn der Behälter 8 trotz Abgabe eines Warnsignals leergefahren worden ist.

## Patentansprüche

1. Automatische Bearbeitungsvorrichtung, insbesondere Schweißvorrichtung an einer Fertigungslinie,
**gekennzeichnet durch** eine Überwachungs- und Steuereinrichtung, die jeweils erfaßt, ob der an einem Werkstück vorgesehene Bearbeitungsvorgang, insbesondere Schweißvorgang ausgeführt wird, und eine Auftragseinrichtung (6), die im Falle eines nicht oder fehlerhaft ausgeführten Bearbeitungsvorgangs, insbesondere Schweißvorgangs von der Steuereinrichtung aktiviert wird und eine Markierung auf das Werkstück aufbringt.

2. Vorrichtung nach Anspruch 1,
dadurch gekennzeichnet, daß die Auftragsvorrichtung (6) an dem Schweißkopf (2) der Schweißvorrichtung befestigt ist.

3. Vorrichtung nach Anspruch 1 oder 2,
dadurch gekennzeichnet, daß die Auftragsvorrichtung (6) so befestigt ist, daß die Markierung in der Nähe der vorgesehenen Schweißstelle aufgebracht wird.

4. Vorrichtung nach einem der Ansprüche 1 bis 3,
dadurch gekennzeichnet, daß die Auftragsvorrichtung eine Spritzpistole ist.

5. Vorrichtung nach Anspruch 4,
dadurch gekennzeichnet, daß die Markierung eine Farbmarkierung ist.

6. Vorrichtung nach einem der Ansprüche 1 bis 5,
dadurch gekennzeichnet, daß die Markierungsflüssigkeitsquelle mit einer Wägezelle (18) verbunden ist, die die verfügbare Markierungsflüssigkeitsmenge erfaßt.

7. Vorrichtung nach Anspruch 6,
dadurch gekennzeichnet, daß die Wägezelle (18) mit einer Auswertungs- und Anzeigeeinrichtung versehen ist, die die jeweils verfügbare Markierungsflüssigkeitsmenge anzeigt.

8. Verfahren zum Kontrollieren von Schweißverbindungen auf Werkstücken an einer Schweißstation einer Fertigungslinie, dadurch gekennzeichnet, daß jeder Schweißvorgang überwacht wird und daß bei einem fehlerhaften oder nicht ausgeführten Schweißvorgang eine Markierung auf das Werkstück aufgebracht wird.

9. Verfahren nach Anspruch 8,
dadurch gekennzeichnet, daß als Markierung eine Farbmarkierung auf das Werkstück aufgesprüht wird.

10. Verfahren nach Anspruch 8 oder 9,
dadurch gekennzeichnet, daß die Farbmarkierung erfaßt wird und daß das zugehörige Werkstück aus der Fertigungslinie ausgesondert wird.
